# EUROPÄISCHE PATENTSCHRIFT

(11) **EP 3 034 255 B1**
(45) Veröffentlichungstag und Bekanntmachung des Hinweises auf die Patenterteilung: **12.04.2017**
(21) Anmeldenummer: 14199482.2
(22) Anmeldetag: 19.12.2014
(51) Int. Cl.: B27B 17/08, F16D 49/02, F16D 65/06

(54) **Bremsband für Kettensägen**
Brake belt for chain saws
Bande de freinage pour scies à chaîne

(43) Veröffentlichungstag der Anmeldung: 22.06.2016
(73) Patentinhaber: J.N. Eberle Federnfabrik GmbH, 86830 Schwabmünchen (DE)
(72) Erfinder: Mändle, Werner, 86505 Münsterhausen (DE)
(74) Vertreter: Westphal, Mussgnug & Partner Patentanwälte mbB

(56) Entgegenhaltungen:
- EP-A2- 2 784 343
- US-A- 4 635 364

## Beschreibung

Die Erfindung betrifft ein Bremsband für eine Kettensäge gemäß dem Oberbegriff des Patentanspruchs 1.

Ein solches Bremsband ist der EP 2 784 343 A2 zu entnehmen. Es ist bekannt, Bremsbänder in Kettensägen, beispielsweise Elektro- oder Motorkettensägen, für ein Kettenbremssystem einzusetzen, um die Sicherheit des Bedieners zu erhöhen. Das Bremsband ist aus einem Flachband, insbesondere einem metallischen Flachband, gefertigt und weist einen gekrümmten Abschnitt sowie zwei Befestigungsabschnitte auf. Der gekrümmte Abschnitt umschlingt zumindest abschnittsweise eine Bremstrommel und liegt zum Bremsvorgang an dieser an, sodass eine Reibung zwischen dem Bremsband und der Bremstrommel entsteht, die die Bremstrommel und die mit der Bremstrommel verbundene Sägenkette in den Stillstand überführt.

Bekannt ist es, die Bremsbänder aus kaltgewalztem Chrom-Nickel-Stahl oder aus martensitisch gehärtetem Kohlenstoffstahl herzustellen. Da diese Materialien Mängel in der Verschleißfestigkeit aufweisen, werden die bekannten Bremsbänder zusätzlich oft mit sehr teuren Beschichtungsverfahren beschichtet, um die Verschleißfestigkeit und Dauerhaltbarkeit zu erhöhen. Derartige Bremsbänder sind jedoch aufwändig und teuer.

Die Aufgabe der Erfindung besteht darin, ein Bremsband für eine Kettensäge bereitzustellen, welches wenig Verschleiß aufweist, aber kostengünstig zu fertigen ist.

Die Aufgabe der Erfindung wird gelöst durch ein Bremsband mit den Merkmalen des Patentanspruchs 1.

Vorteilhafte Ausgestaltungen und Weiterbildungen der Erfindung sind in den abhängigen Ansprüchen angegeben.

Das erfindungsgemäße Bremsband für eine Kettensäge, welches ein Flachband mit einem gekrümmten Abschnitt und zwei Befestigungsabschnitten aufweist, zeichnet sich dadurch aus, dass das Bremsband aus martensitisch gehärtetem Chromstahl gefertigt ist. Martensitisch gehärteter Chromstahl lässt sich kostengünstig fertigen und weist eine hohe Verschleißfestigkeit auf, insbesondere auch ohne eine zusätzliche Beschichtung. Bei der Fertigung dieser Bremsbänder kann somit auf die teuren Beschichtungsverfahren verzichtet werden, sodass die Bremsbänder kostengünstig gefertigt werden können.

Vorteilhafterweise weist der Chromstahl einen Kohlenstoffgehalt von mehr als 0,15% auf, wodurch die Verschleißfestigkeit verbessert werden kann.

Sofern der Chromstahl als Zusatz vorteilhafterweise Molybdän und/oder Vanadium aufweist, kann die Verschleißfestigkeit weiter verbessert werden.

Vorzugsweise schließt der gekrümmte Abschnitt einen Winkel von mindestens 360° ein, was dazu führt, dass das Bremsband eine Bremstrommel der Kettensäge vollständig umschlingt und dadurch eine gute Reibwirkung und damit Bremswirkung erzielt werden kann.

Vorteilhafterweise ist wenigstens einer der Befestigungsabschnitte als Einhängehaken ausgebildet, um ein einfaches und sicheres Befestigen zu ermöglichen.

Gemäß einer bevorzugten Ausführungsform weist wenigstens einer der Befestigungsabschnitte einen Durchbruch auf, was eine sichere Befestigung beispielsweise mittels einer Schraube ermöglicht.

Eine erfindungsgemäße Kettensäge weist ein wie vorstehend beschriebenes erfindungsgemäßes Bremsband auf. Eine vorteilhafte Weiterentwicklung der Kettensäge zeichnet sich dadurch aus, dass die Kettensäge als Elektro- oder Motorkettensäge ausgebildet ist, da bei derartigen Kettensägen besonderer Bedarf an einer erhöhten Sicherheit für den Bediener besteht.

Die Erfindung wird anhand der nachfolgenden Figur ausführlich erläutert. Es zeigt:

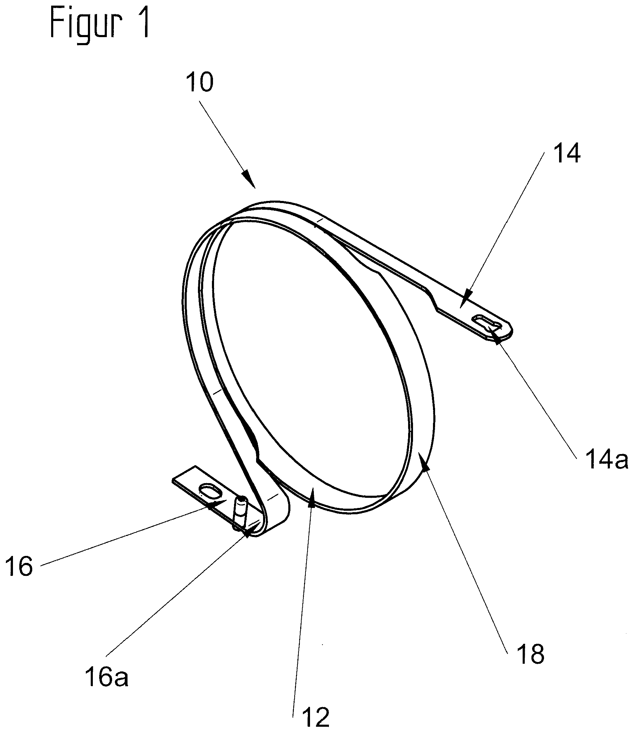

- Fig. 1: eine perspektivische Ansicht eines Ausführungsbeispieles eines Bremsbandes.

Figur 1 zeigt ein Bremsband 10 für eine Kettensäge, insbesondere eine Elektro- oder Motorkettensäge, mit einem Flachband 12, welches einen gekrümmten Abschnitt 18 sowie zwei Befestigungsabschnitte 14, 16 aufweist. Der gekrümmte Abschnitt 18 des Flachbandes 12 kann dabei einen Winkel von mehr als 360° einschließen, sodass er eine Bremstrommel vollständig umschlingen kann. Einer der Befestigungsabschnitte 14 kann einen Durchbruch 14a aufweisen, durch welchen zur Fixierung des Bremsbandes 10 beispielsweise eine Schraube geführt werden kann. Der andere Befestigungsabschnitt 16 kann einen Einhängehaken 16a aufweisen, welcher das Befestigen vereinfachen kann. Zusätzlich kann auch der Befestigungsabschnitt 16 einen Durchbruch aufweisen, durch welchen zur Fixierung beispielsweise eine Schraube geführt werden kann.

Das Bremsband 10 ist aus martensitisch gehärtetem Chromstahl gefertigt. Ein derart gefertigtes Bremsband 10 kann insbesondere ohne zusätzliche Beschichtungsverfahren in einer Kettensäge eingesetzt werden, da martensitisch gehärtete Chromstähle eine besonders hohe Verschleißfestigkeit aufweisen. Der Kohlenstoffgehalt der verwendeten Chromstähle ist vorteilhafterweise höher als 0,15%. Zusätze von Molybdän und/oder Vanadium können die Verschleißfestigkeit weiter verbessern. Als besonders geeignet haben sich die martensitisch gehärteten Chromstähle mit den Werkstoffnummern 1.4028, 1.4031, 1.4034, 1.4037 und 1.4419 herausgestellt.

### Bezugszeichenliste

- 10: Bremsband
- 12: Flachband
- 14: Befestigungsabschnitt
- 14a: Durchbruch
- 16: Befestigungsabschnitt
- 16a: Einhängehaken
- 18: Gekrümmter Abschnitt

## Patentansprüche

1. Bremsband (10) für eine Kettensäge, welches ein Flachband (12) mit einem gekrümmten Abschnitt (18) und zwei Befestigungsabschnitten (14, 16) aufweist,
**dadurch gekennzeichnet, dass** das Bremsband aus martensitisch gehärtetem Chromstahl gefertigt ist.

2. Bremsband (10) nach Anspruch 2,
**dadurch gekennzeichnet, dass** der Chromstahl einen Kohlenstoffgehalt von mehr als 0,15% aufweist.

3. Bremsband (10) nach Anspruch 1 oder 2,
**dadurch gekennzeichnet, dass** der Chromstahl als Zusatz Molybdän und/oder Vanadium aufweist.

4. Bremsband (10) nach einem der vorhergehenden Ansprüche, **dadurch gekennzeichnet, dass** der gekrümmte Abschnitt (18) einen Winkel von mindestens 360° einschließt.

5. Bremsband (10) nach einem der vorhergehenden Ansprüche, **dadurch gekennzeichnet, dass** wenigstens einer der Befestigungsabschnitte (16) als Einhängehaken (16a) ausgebildet ist.

6. Bremsband (10) nach einem der vorhergehenden Ansprüche, **dadurch gekennzeichnet, dass** wenigstens einer der Befestigungsabschnitte (14) einen Durchbruch (14a) aufweist.

7. Kettensäge mit einem Bremsband (10) nach einem der vorhergehenden Ansprüche.

8. Kettensäge nach Anspruch 7,
**dadurch gekennzeichnet, dass** die Kettensäge als eine Elektro- oder Motorkettensäge ausgebildet ist.

## Claims

1. Brake belt (10) for a chainsaw, said brake belt (10) having a flat belt (12) having a bent section (18) and two fixing sections (14, 16),
**characterised in that**
the brake belt is made from martensitically hardened chromium steel.

2. Brake belt (10) according to claim 1,
**characterised in that**
the chromium steel has a carbon content of more than 0.15%.

3. Brake belt (10) according to claim 1 or 2,
**characterised in that**
the chromium steel has molybdenum and/or vanadium added to it.

4. Brake belt (10) according to one of the preceding claims,
**characterised in that**
the bent section (18) includes an angle of at least 360°.

5. Brake belt (10) according to one of the preceding claims,
**characterised in that**
at least one of the fixing sections (16) is formed as a mounting hook (16a).

6. Brake belt (10) according to one of the preceding claims,
**characterised in that**
at least one of the fixing sections (14) has an aperture (14a).

7. Chainsaw having a brake belt (10) according to one of the preceding claims.

8. Chain saw according to claim 7,
**characterised in that**
the chainsaw is formed as an electric or motor chainsaw.

## Revendications

1. Collier de frein (10) pour une roue à chaîne comprenant une bande plane (12) ayant un segment courbe (18) et deux segments de fixation (14, 16),
**caractérisé en ce que**
le collier de frein est réalisé en un acier au chrome trempé à structure martensitique.

2. Collier de frein (10) conforme à la revendication 2,
**caractérisé en ce que**
l'acier au chrome a une teneur en carbone supérieure à 0,15 %.

3. Collier de frein (10) conforme à l'une des revendications 1 et 2, **caractérisé en ce que**
l'acier au chrome renferme en tant qu'additif du molybdène et/ou du vanadium.

4. Collier de frein (10) conforme à l'une des revendications précédentes, **caractérisé en ce que**
le segment courbe (18) enserre un angle d'au moins 360°.

5. Collier de frein (10) conforme à l'une des revendications précédentes, **caractérisé en ce qu'**
au moins l'un des segments de fixation (16) est réalisé sous la forme d'un crochet de suspension (16a).

6. Collier de frein (10) conforme à l'une des revendications précédentes, **caractérisé en ce qu'**
au moins l'un des segments de fixation (14) présente un évidement (14a).

7. Scie à chaîne comprenant un collier de frein (10) conforme à l'une des revendications précédentes.

8. Scie à chaîne conforme à la revendication 7,
**caractérisée en ce qu'**
elle est réalisée sous la forme d'une roue à chaîne électrique ou d'une roue à chaîne motorisée.
